# EUROPÄISCHE PATENTANMELDUNG

(11) **EP 4 503 859 A1**
(43) Veröffentlichungstag der Anmeldung: **05.02.2025**
(21) Anmeldenummer: 24190596.7
(22) Anmeldetag: 24.07.2024
(51) Int. Cl.: H05B 6/68, H05B 6/70, H05B 6/64, F24C 15/00, G01K 11/26

(54) **VERFAHREN ZUM MESSEN EINER KERNTEMPERATUR IN EINEM KOMBINATIONSGARGERÄT SOWIE EIN KOMBINATIONSGARGERÄT**

(30) Priorität: 02.08.2023 DE 102023120511
(71) Anmelder: Rational Aktiengesellschaft, 86899 Landsberg am Lech (DE)
(72) Erfinder: Koenen, Christian, 86899 Landsberg am Lech (DE); Fehn, Heinrich, 86899 Landsberg am Lech (DE); Doll, Alexander, 86899 Landsberg am Lech (DE)
(74) Vertreter: Prinz & Partner mbB

(57) **Zusammenfassung**

Die Erfindung betrifft ein Verfahren zum Messen einer Kerntemperatur eines Garguts (20) in einem Kombinationsgargerät (10) mit einem Garraum (14), einer Halbleiter-Mikrowelleneinheit (28) und wenigstens einer Antenne (44), mit den folgenden Schritten:
- Einspeisen von Mikrowellen in den Garraum (14) mittels der Halbleiter-Mikrowelleneinheit (28) in einem Messzeitschlitz,
- Anregen eines in einem Kerntemperaturfühler integrierten Oberflächenwellensensors (SAW-Sensors 24) im Garraum (14) mit Mikrowellenenergie der eingespeisten Mikrowellen,
- Empfangen eines Antwortsignals des SAW-Sensors (24) über die Antenne (44), wobei das Antwortsignal vom SAW-Sensors (24) nach einem Abklingen der Mikrowellenenergie im Garraum (14) reflektiert wird, und
- Auswerten des Antwortsignals.

Ferner betrifft die Erfindung ein Kombinationsgargerät (10) zum Garen von Gargut (20).

## Beschreibung

Die Erfindung betrifft ein Verfahren zum Messen einer Kerntemperatur eines Garguts in einem Kombinationsgargerät. Ferner betrifft die Erfindung ein Kombinationsgargerät zum Garen von Gargut.

Aus dem Stand der Technik sind Gargeräte bekannt, die neben konventionellen Energiequellen wie einer Heißluftvorrichtung und einer Dampferzeugungsvorrichtung zusätzlich noch eine Mikrowelleneinheit aufweisen, über die Energie in einem Garraum des Gargeräts befindliches Gargut eingebracht werden kann, um das Gargut zu garen. Derartige Gargeräte werden auch als Kombinationsgargeräte bezeichnet, da diese Gargeräte mehrere unterschiedliche Energiequellen miteinander kombinieren. Die Kombinationsgargeräte werden typischerweise in Profiküchen eingesetzt, beispielsweise in Kantinen oder in der Gastronomie.

Die Kombinationsgargeräte werden in zwei Klassen eingeteilt, die sich durch die Art der Mikrowelleneinheit unterscheiden. In der ersten Klasse, die den traditionellen Weg darstellt, werden Magnetrons als Mikrowelleneinheit eingesetzt. Anstelle der Magnetrons können aber auch sogenannte Halbleiter-Mikrowelleneinheiten verwendet werden, die auch als SSC-Hardware ("Solid State Cooking"-Hardware) bezeichnet werden. Insofern ersetzen die Halbleiterbauteile die traditionell verwendeten Magnetrons, um die Mikrowellen zu erzeugen.

Die Kombinationsgargeräte weisen unabhängig von ihrem jeweiligen Typ üblicherweise ein Lüfterrad auf, welches sich während des Betriebs des Gargeräts dreht, um das im Garraum vorliegende Garraumklima zu verwirbeln, sodass der gewünschte Energieeintrag durch Heißluft und/oder Dampf in das Gargut erfolgt. Das drehende Lüfterrad hat jedoch einen starken Einfluss auf das von der Mikrowelleneinheit erzeugte Mikrowellenfeld im Garraum, da dieses ebenfalls entsprechend verwirbelt wird. Das Lüfterrad fungiert nämlich als Modenmischer.

Des Weiteren sind Kerntemperaturfühler aus dem Stand der Technik bekannt, mit denen die Kerntemperatur des zu garenden Garguts, also die Temperatur innerhalb des Garguts, gemessen werden kann. In Abhängigkeit von der gemessenen Kerntemperatur kann ein ablaufender Garprozess entsprechend gesteuert bzw. angepasst werden, wodurch sichergestellt wird, dass das gewünschte Garergebnis erreicht wird. Es wird nämlich unter anderem sichergestellt, dass eine gewünschte Kerntemperatur des Garguts nicht überschritten wird, sodass ein Übergaren ausgeschlossen wird. Dies ist insbesondere beim Garen von Fleisch von Bedeutung, um sicherzustellen, dass die gewünschte Garstufe, beispielsweise "Medium", vorliegt und nicht überschritten wird.

Vorzugsweise werden dafür kabellose Kerntemperaturfühler verwendet, die Oberflächenwellensensoren (SAW-Sensoren) umfassen. Dabei wird zwischen Verzögerungsleitung- und Resonanz-SAW-Sensoren unterschieden. Ein kabelloser Kerntemperaturfühler hat üblicherweise eine Verschaltung mehrerer SAW-Sensoren sowie eine Antenne für die Signalübertragung.

Allerdings würde es aufgrund der hohen Mikrowellenleistung der Halbleiter-Mikrowelleneinheit zu Beschädigungen der SAW-Sensoren kommen, insbesondere bei SAW-Sensoren für das ISM-Band um 2,4 GHz, weswegen derartige Kerntemperaturfühler nicht verwendet werden können, wenn das Kombinationsgargerät in einem Mikrowellenbetrieb betrieben wird, also Mikrowellen in den Garraum eingespeist werden.

Aus diesem Grund wird in diesem Betriebsmodus auf kabelgebundene Kerntemperaturfühler zurückgegriffen. Dies hat jedoch zur Folge, dass zwei unterschiedliche Kerntemperaturfühler vorgehalten werden müssen. Zudem besteht das Risiko, dass ein Betreiber des Kombinationsgargeräts vergisst, den Kerntemperaturfühler zu tauschen oder versehentlich den kabellosen Kerntemperaturfühler verwendet, wodurch dieser beschädigt wird.

Aufgrund des kabelgebundenen Kerntemperaturfühlers ist jedoch der Bedienungskomfort deutlich geringer.

Aus der DE 10 2021 110 521 A1 ist ein Verfahren zum Garen von Gargut in einem Kombinationsgargerät bekannt.

Die DE 10 2021 129 787 A1 beschreibt ein Garsystem mit einem Mikrowellengerät und einem separaten Temperaturfühler.

Die DE 10 2017 117 133 A1 zeigt ein Verfahren zur kabellosen Signalübertragung in einem Gargerät.

Darüber hinaus sind aus dem Stand der Technik Verfahren und Gargeräte bekannt, bei denen eine Mikrowellenquelle zum Sensieren verwendet wird. Beispielsweise ist in der DE 10 2021 120 310 A1 ein Verfahren zur Lasterkennung in einem Gargerät beschrieben.

Daher ist es die Aufgabe der Erfindung, eine Kerntemperatur in einem Kombinationsgargerät mit hohem Bedienungskomfort dauerhaft zu ermöglichen, also ohne Beschädigung des Kerntemperaturfühlers.

Die Aufgabe wird erfindungsgemäß gelöst durch ein Verfahren zum Messen einer Kerntemperatur eines Garguts in einem Kombinationsgargerät mit einem Garraum, einer Halbleiter-Mikrowelleneinheit und wenigstens einer Antenne, mit den folgenden Schritten:
- Einspeisen von Mikrowellen in den Garraum mittels der Halbleiter-Mikrowelleneinheit in einem Messzeitschlitz,
- Anregen eines in einem Kerntemperaturfühler integrierten Oberflächenwellensensors, also eines SAW-Sensors ("Surface Acoustic Wave" - Sensors) im Garraum mit Mikrowellenenergie der eingespeisten Mikrowellen,
- Empfangen eines Antwortsignals des Oberflächenwellensensors über die Antenne, wobei das Antwortsignal vom Oberflächenwellensensor nach einem Abklingen der Mikrowellenenergie im Garraum reflektiert wird, und
- Auswerten des Antwortsignals.

Ferner wird die Aufgabe erfindungsgemäß gelöst durch ein Kombinationsgargerät zum Garen von Gargut, mit einer Steuer- und Auswerteeinheit, einer Halbleiter-Mikrowelleneinheit und einer Antenne. Das Kombinationsgargerät umfasst einen Kerntemperaturfühler mit wenigstens einem integrierten Oberflächenwellensensor. Die Halbleiter-Mikrowelleneinheit ist eingerichtet, in einem Kerntemperaturerfassungsmodus zum Auslesen einer Kerntemperatur mittels des SAW-Sensors betrieben zu werden. Die Steuer- und Auswerteeinheit ist eingerichtet, die Halbleiter-Mikrowelleneinheit im Kerntemperaturerfassungsmodus zu betreiben, wobei der SAW-Sensor in dem Kerntemperaturerfassungsmodus angeregt wird. Der SAW-Sensor ist eingerichtet, ein Antwortsignal auszugeben, wobei die Antenne eingerichtet ist, das vom SAW-Sensor ausgesandte Antwortsignal zu empfangen und an die Steuer- und Auswerteeinheit weiterzuleiten. Die Steuer- und Auswerteeinheit ist ferner eingerichtet, das vom SAW-Sensor empfangene Antwortsignal auszuwerten, um die Kerntemperatur zu ermitteln.

Grundsätzlich ist das Kombinationsgargerät, insbesondere die Steuer- und Auswerteeinheit zusammen mit der SSC-Hardware, also die Halbleiter-Mikrowelleneinheit, dazu ausgelegt, die Streuparameter (S-Parameter) des Garraums zu ermitteln. Basierend auf den Streuparametern kann der Einfluss des SAW-Sensors, insbesondere des Antwortsignals, ermittelt werden, sodass der SAW-Sensor im Garraum ausgelesen werden kann, also das Antwortsignal des SAW-Sensors identifiziert und ausgewertet werden kann.

Der Grundgedanke der Erfindung ist es also, die SSC-Hardware, die beispielsweise zum Garen des Garguts in einem Garmodus der Halbleiter-Mikrowelleneinheit vorgesehen ist, zusätzlich zum Anregen und Auslesen des SAW-Sensors im Garraum zu verwenden. Insofern kann die Halbleiter-Mikrowelleneinheit grundsätzlich eingerichtet sein, Mikrowellen zum Garen des Garguts zu erzeugen. Neben dem Garmodus kann ein spezieller Kerntemperaturerfassungsmodus implementiert sein, gemäß dem die Halbleiter-Mikrowelleneinheit betrieben wird. Der Kerntemperaturerfassungsmodus der Halbleiter-Mikrowelleneinheit stellt sicher, dass die Halbleiter-Mikrowelleneinheit Mikrowellen erzeugt, die eine Anregung des SAW-Sensors ermöglichen, ohne diesen zu beschädigen. Es kann aber auch grundsätzlich vorgesehen sein, dass die Halbleiter-Mikrowelleneinheit ausschließlich zum Sensieren verwendet wird, also keinen Garmodus aufweist. Neben dem Kerntemperaturerfassungsmodus kann die Halbleiter-Mikrowelleneinheit aber zumindest einen weiteren Sensormodus aufweisen, beispielsweise zum Sensieren der Beladung.

Die Auswertung kann ebenfalls unter der Verwendung der zum Garen des Garguts mittels Mikrowellen vorgesehenen Antenne(n) erfolgen. Um das Antwortsignal des SAW-Sensors des Kerntemperaturfühlers zu empfangen, kann dieselbe Antenne verwendet werden, über die zuvor die Mikrowellen in den Garraum eingespeist wurden, um den SAW-Sensor anzuregen. Alternativ oder ergänzend kann auch eine andere Antenne der SSC-Hardware verwendet werden, um das Antwortsignal des SAW-Sensors des Kerntemperaturfühlers zu empfangen.

Sofern mehrere Antennen vorgesehen sind, können alle Antennen zum Anregen des SAW-Sensors und/oder zum Empfangen des Antwortsignals des SAW-Sensors verwendet werden, also zum Auslesen des Kerntemperaturfühlers bzw. zur Bestimmung wenigstens eines Streuparameters, basierend auf dem das Antwortsignal identifiziert und die Kerntemperatur ermittelt wird.

Die Verwendung mehrerer Antennen stellt sicher, dass die Kerntemperatur unabhängig von der elektromagnetischen Feldverteilung im Garraum ermittelt werden kann.

Zudem weist das Kombinationsgargerät typischerweise eine Mikrowellenfalle auf, die eine Leckage der Mikrowellen verhindert. Diese Mikrowellenfalle dient auch dazu, dass der Garraum von äußeren Strahlungsquellen abgeschirmt ist. Folglich kann vermieden werden, dass Störsignale außerhalb des Garraums das Auslesen des Kerntemperaturfühlers beeinflussen.

Es kann der SAW-Sensor über die mittels der Halbleiter-Mikrowelleneinheit in den Garraum eingespeisten Mikrowellen angeregt werden, die ansonsten zum Garen des Garguts vorgesehen ist. Es muss also keine zusätzliche Anregungsquelle für den SAW-Sensor vorgesehen werden.

Des Weiteren wird die Bedienung bzw. das Erfassen der Kerntemperatur vereinfacht, da ein kabelloser Kerntemperaturfühler verwendet werden kann, um die Kerntemperatur des Garguts zu erfassen, auch wenn dies zumindest teilweise mittels Mikrowellenenergie gegart wird. Somit kann der Kerntemperaturfühler einfach überall platziert werden, ohne dass es Restriktionen gibt, bspw. die Kabellänge beachtet werden muss.

Der Garmodus der Halbleiter-Mikrowelleneinheit kann sich vom Kerntemperaturerfassungsmodus der Halbleiter-Mikrowelleneinheit dadurch abgrenzen, dass die Mikrowellen von der Halbleiter-Mikrowelleneinheit mit anderen Eigenschaften erzeugt werden, bspw. mit einer anderen Leistung.

Grundsätzlich kann die Halbleiter-Mikrowelleneinheit eine oder mehrere Leistungsstufen aufweisen, die jeweils eine Vorstufe und eine Endstufe haben können. Jeder Leistungsstufe ist dabei eine Antenne zugeordnet. Sofern die Halbleiter-Mikrowelleneinheit beispielsweise keinen Garmodus aufweist, kann auf die Endstufe aber auch verzichtet werden. Dies kann dann der Fall sein, wenn die Halbleiter-Mikrowelleneinheit ausschließlich zum Sensieren verwendet wird.

Ein Aspekt sieht vor, dass nach dem Anregen des Oberflächenwellensensors (SAW-Sensors) eine Pause erfolgt, insbesondere eine Pause bis zu 10 µs, beispielsweise zwischen 1 µs und 5 µs, bevor das Antwortsignal empfangen wird. Diese Pause dient dazu, etwaige Störreflektionen abzuwarten, sodass diese sich nicht mit dem Antwortsignal vermischen. Dabei handelt es sich um das Abklingen des elektromagnetischen Felds bzw. der Leistung im Garraum. Auch stellt die Pause sicher, dass dieselbe Antenne verwendet werden kann, um den SAW-Sensor anzuregen und dessen Antwortsignal zu empfangen, also die Antenne von einem Sende- in einen Empfangsmodus umzuschalten.

Die Antenne kann mit einem Empfangskanal verbunden sein, in dem ein Verstärker vorgesehen ist, der zugeschaltet wird, um das Antwortsignal zu verstärken. Dabei ist der Verstärker insbesondere in einer Bypassleitung angeordnet, die zugeschaltet wird, um den Verstärker zuzuschalten. In anderen Worten, der Verstärker wird (ausschließlich) für das Empfangen des Antwortsignals zugeschaltet, also nach dem Anregen des SAW-Sensors bzw. in der Pause, also nach den etwaigen Störreflektionen, welche während der Pause auftreten. Ein solcher Verstärker erlaubt die Auswertung eines schwachen Antwortsignals, also eines Antwortsignals mit geringer Leistung. Der Verstärker vergrößert somit den Dynamikbereich für die Messung des SAW-Sensors. Bei dem Verstärker handelt es sich bevorzugt um einen rauscharmen Verstärker, auch als Low-Noise-Amplifier (LNA) bezeichnet.

Da aufgrund des zuschaltbaren Verstärkers auch Antwortsignale mit geringer Signalstärke bzw. Leistung ausgewertet werden können, ist es möglich, einen schlecht abgestimmten SAW-Sensor, bspw. einen SAW-Sensor mit einer schlecht abgestimmten Antenne, für die eingespeisten Mikrowellensignale zu verwenden. Das heißt, dass der SAW-Sensor nicht optimal an die eingespeisten Mikrowellen bzw. das dadurch erzeugte Mikrowellenfeld angebunden wird, sodass der SAW-Sensor auch bei einer maximal eingespeisten Leistung der Halbleiter-Mikrowelleneinheit nicht beschädigt werden würde. Diese Maßnahme ist vergleichbar mit einem Dämpfungsglied im Empfangspfad des SAW-Sensors bzw. des kabellosen Kerntemperaturfühlers.

Die schlechte Anbindung des SAW-Sensors kann alternativ oder ergänzend zu einer geringen Leistung der eingespeisten Mikrowellen im Kerntemperaturerfassungsmodus gegenüber der Leistung der Mikrowellen im Garmodus vorgesehen sein.

Aufgrund der zuschaltbaren Bypassleitung des Empfangskanals, in der der Verstärker angeordnet ist, ist insbesondere sichergestellt, dass im Garmodus der Halbleiter-Mikrowelleneinheit keine Verstärkung der über den Empfangskanal empfangenen Mikrowellen erfolgt. Auch im Garmodus werden typischerweise Mikrowellen empfangen und ausgewertet, um die Halbleiter-Mikrowelleneinheit anzusteuern bzw. zu regeln. Typischerweise werden im Garmodus ebenfalls die Streuparameter ermittelt, basierend worauf die Halbleiter-Mikrowelleneinheit angesteuert bzw. geregelt werden.

Der Verstärker ist in jedem Fall optional, da unter Umständen der vorhandene Dynamikbereich im Falle eines schlecht an das Mikrowellenfeld angebundenen SAW-Sensors ausreichend sein kann.

Gemäß einer Ausführungsform ist vorgesehen, dass das Kombinationsgargerät ein Lüfterrad umfasst, wobei die Mikrowelleneinheit mit einer Lüfterradumdrehung synchronisiert ist. Die Lüfterradumdrehung wird dabei in mehrere Zeitschlitze zerlegt, wobei ein Zeitschlitz einem definierten Winkelsegment des sich drehenden Lüfterrads entspricht. Ein solches Winkelsegment ist kleiner als 360°, insbesondere kleiner als 10°, vorzugsweise kleiner als 1°. Die Anzahl an Zeitschlitzen ist bevorzugt 400. Die Halbleiter-Mikrowelleneinheit, insbesondere das Einspeisen von Mikrowellen in den Garraum sowie das Empfangen des Antwortsignals, erfolgen synchronisiert zum Betrieb des Lüfterrads, sodass die Drehung des Lüfterrads keinen negativen Einfluss auf die Kerntemperaturbestimmung hat. Die Mikrowellensignale, die zur Bestimmung der Kerntemperatur genutzt werden, werden aufgrund des synchronen Betriebs nicht durch die Drehung des Lüfterrads verwischt. Es können vielmehr mehrere (unterschiedliche) Lüfterradpositionen überlagert werden, wodurch die Auswertung verbessert wird, insbesondere die Genauigkeit. Es kann jedem Zeitschlitz ein (spezieller) Anregungsvektor zugeordnet werden, sodass während einer Drehung des Lüfterrads mehrere unterschiedliche Operationsmodi vorgesehen sein können. Dies ermöglicht ein effizientes Garen des Garguts und mehrere Messsequenzen während einer Lüfterradumdrehung. Prinzipiell kann auch jeder Zeitschlitz als Messzeitschlitz verwendet werden.

Grundsätzlich können mehrere Messsignale empfangen werden, also das Antwortsignal des SAW-Sensors von mehreren Antennen (im Wesentlichen gleichzeitig) empfangen werden, bspw. von vier Antennen. Die Messsignale können zudem bei mehreren Lüfterradpositionen empfangen worden sein. Hierdurch kann der Signal-Rausch-Abstand verbessert werden.

Wie bereits beschrieben, ist bei der Verwendung mehrerer Antennen zudem sichergestellt, dass das von der Halbleiter-Mikrowelleneinheit erzeugte elektromagnetische Feld den gesamten Garraum (homogen) abdeckt, sodass der Kerntemperaturfühler frei positionierbar ist. Anders ausgedrückt gibt es im Garraum keine "Funklöcher".

Ein weiterer Aspekt sieht vor, dass die Mikrowellenenergie, die zum Anregen des SAW-Sensors dient, nicht der Resonanzfrequenz des SAW-Sensors entspricht. Somit wird sichergestellt, dass der SAW-Sensor nicht optimal an das Mikrowellenfeld angebunden ist, sodass er auch bei maximaler Leistung der Halbleiter-Mikrowelleneinheit nicht beschädigt wird.

Gemäß einer Ausführungsform ist vorgesehen, dass der SAW-Sensor ein Laufzeit-SAW-Sensor ist. Dabei werden in einem Frequenzbereich mehrere Frequenzpunkte vermessen, die in den Zeitbereich transformiert werden, um die Kerntemperatur zu ermitteln, insbesondere wobei die Kerntemperatur anhand einer Laufzeit einer Impulsantwort ermittelt wird. Die Anzahl der Frequenzpunkte im Frequenzbereich hat dabei einen Einfluss auf die Auflösung und somit die Genauigkeit. Aus der Transformation der gemessenen Frequenzpunkte in den Zeitbereich ergibt sich die Impulsantwort des SAW-Sensors.

Die Auswertung des SAW-Sensors kann im Frequenzbereich erfolgen, d.h. in dem entsprechenden Zeitschlitz wird eine Frequenz gemessen, wodurch ein Frequenzspektrum erfasst wird. Anschließend wird eine Transformation in den Zeitbereich durchgeführt, um so einen Zeitverlauf des Signals aus dem Frequenzspektrum zu erhalten. Dies kann mittels einer inversen Fourier-Transformation erfolgen.

Ein Aspekt sieht vor, dass der gesamte Frequenzbereich über äquidistante Frequenzpunkte vermessen wird, insbesondere wobei der Messvorgang über alle Zeitschlitze in wenigstens einer Lüfterradumdrehung, vorzugsweise in 2 bis 3 Lüfterradumdrehungen, oder in einem festen Zeitschlitz über mehrere Lüfterradumdrehungen erfolgt, wobei die Anzahl der Lüfterradumdrehungen der Anzahl der äquidistanten Frequenzpunkte entspricht. Dies hängt beispielsweise davon ab, ob ein schlecht angepasster SAW-Sensor verwendet wird oder nicht. Sofern ein einzelner Zeitschlitz der mehreren Zeitschlitze exklusiv für die Kerntemperaturbestimmung vorgesehen ist, also den Kerntemperaturerfassungsmodus, so entspricht die Anzahl der Lüfterradumdrehungen der Anzahl der äquidistanten Frequenzpunkte, da pro Lüfterradumdrehung eine Frequenz vorgesehen sein wird. Es kann aber auch vorgesehen sein, dass die Frequenz während einer Lüfterradumdrehung variiert wird, sodass mehrere Frequenzpunkte während einer Lüfterradumdrehung erfasst werden können, sodass die gewünschte Anzahl an Frequenzpunkten bereits in 2 bis 3 Lüfterradumdrehungen erfasst worden sind.

Üblicherweise werden zum Vermessen des gesamten Frequenzbereiches etwa 1.000 äquidistante Frequenzpunkte vermessen. Somit ist eine Messung unter Verwendung aller oder zumindest mehrerer Zeitschlitze pro Lüfterradumdrehung vorteilhaft, da hierdurch eine kurze Aktualisierungszeit der Kerntemperaturmessung realisiert werden kann. Anders ausgedrückt wird also über etwa 1.000 Zeitschlitze je ein Frequenzpunkt vermessen, wobei jeder dieser Frequenzpunkte den gleichen Abstand zu anderen Frequenzpunkten aufweist.

Um die Kerntemperatur mit einem Laufzeit-SAW-Sensor zu erfassen, werden folgende Schritte ausgeführt:
- Ermitteln eines groben Temperaturwerts basierend auf einem ersten Referenzwert und einer zeitlichen Position wenigstens eines Peaks der Impulsantwort, wobei die zeitliche Position ermittelt wird, indem das Maximum einer aus der Impulsantwort resultierenden Leistungskurve ermittelt wird, und
- Ermitteln eines genauen Temperaturwerts über einen Phasenwert, einen zweiten Referenzwert und den zuvor ermittelten groben Temperaturwert. Die Genauigkeit des somit ermittelten Temperaturwerts liegt in einem Bereich von ±0,5°C.

In anderen Worten wird im ersten Schritt der Auswertung für den SAW-Sensor die im Frequenzbereich aufgenommene Reflektion des SAW-Sensors in den Zeitbereich transformiert, woraus sich die Impulsantwort des SAW-Sensors ergibt, die auch als Hochfrequenzantwort (HF-Antwort) bezeichnet wird. Die Impulsantwort wird anschließend zeitlich eingegrenzt, indem wenigstens ein Fenster auf die Impulsantwort angewandt wird. Das Fenster ist insbesondere so gewählt, dass aufgrund des Antwortsignals erhaltene Peaks in der zeitlich eingegrenzten Impulsantwort für die weitere Auswertung enthalten sind. Typischerweise werden zwei Fenster verwendet, die ein definiertes zeitliches Verhältnis zueinander haben, was auf den verwendeten SAW-Sensor abgestimmt ist, nämlich dem Verhältnis von zwei Peaks zueinander, die aufgrund des verwendeten SAW-Sensors ein definiertes Verhältnis zueinander haben sollten, nämlich aufgrund der im SAW-Sensor verbauten Reflektoren, die für das Antwortsignal verantwortlich sind. Aus den in den jeweiligen Fenstern eingeschlossenen Leistungen, die in diesen Fenstern gemessen worden sind, wird eine Summe gebildet, sodass eine Fensterleistungssumme ermittelt wird. Die Fenster werden über die Impulsantwort geschoben bzw. werden die Summen der Leistungen über die Fenster, also die Fensterleistungssummen, sukzessive bestimmt, wenn die Fenster entlang der Impulsantwort ausgewertet werden. Hierüber wird eine Leistungskurve basierend auf den Fensterleistungssummen ermittelt, deren Maximum bestimmt werden kann. Durch das jeweilige Maximum der Leistungskurve lässt sich auf die zeitliche Position der einzelnen Peaks schließen, wobei die zeitliche Position in Kombination mit einem durch den Hersteller bekannten ersten Referenzwert einen groben Temperaturwert bestimmen lässt.

In einem nachfolgenden zweiten Schritt werden die einzelnen Peaks separiert, um Phaseninformationen ermitteln zu können. Hierfür wird über das sogenannte Time-Gating die Phaseninformationen der einzelnen Peaks ermittelt, deren jeweilige zeitliche Position zuvor ermittelt worden ist. Um die Phaseninformation für einen bestimmten Peak zu ermitteln, werden die anderen Peaks gleich null gesetzt. Die so modifizierte Impulsantwort wird in den Frequenzbereich transformiert, bspw. mithilfe einer Fourier-Transformation, sodass die entsprechende Phaseninformation ermittelt werden kann. Aus der Phaseninformation des jeweiligen Peaks kann am Mittelwert des SAW-Sensors der zugehörige Phasenwert abgelesen werden. Dabei wird das entsprechende Verfahren für jeden Peak in der Impulsantwort separat durchgeführt, um die Phasenwerte für alle Peaks der Impulsantwort zu ermitteln. Da der jeweilige Phasenwert eine Mehrdeutigkeit aufweisen kann, wir aus der Kombination des entsprechenden Phasenwerts, eines Referenzwerts und der zuvor ermittelten groben Temperatur dann der genaue Temperaturwert bestimmt.

Der erste Referenzwert, der für den groben Temperaturwert genutzt wird, kann eine Herstellerangabe sein, wohingegen der zweite Referenzwert, der für den genauen Temperaturwert genutzt wird, aus einer Kalibrierung erhalten sein kann. Auch können der erste und zweite Referenzwert gleich sein, also einen Referenzwert darstellen, der genutzt wird, um zunächst den groben Temperaturwert und anschließend den genauen Temperaturwert zu ermitteln.

Gemäß einer weiteren Ausführungsform ist vorgesehen, dass der SAW-Sensor ein Resonanz-SAW-Sensor ist. Wird ein Resonanz-SAW-Sensor verwendet, so wird nur ein erwarteter Frequenzbereich vermessen, und wobei die Kerntemperatur anhand einer Resonanzverschiebung ermittelt wird. Der Vorteil von Resonanz-SAW-Sensoren liegt darin, dass sie Mikrowellenenergie außerhalb ihrer Resonanz nicht gut aufnehmen, sodass eine bessere Anbindung an das Mikrowellenfeld verwendet werden kann, ohne dass das Risiko besteht, den SAW-Sensor durch die hohe Leistung der Halbleiter-Mikrowelleneinheit zu zerstören.

Wird ein Resonanz-SAW-Sensor verwendet, so wird der Frequenzbereich um die Resonanz des Resonanz-SAW-Sensors während des Garmodus ausgespart, also während des Energieeintrags in das Gargut mittels Mikrowellen. Somit lässt sich ein besserer Dynamikbereich realisieren und gleichzeitig sicherstellen, dass ein kabelloser Kerntemperaturfühler während eines Mikrowellenbetriebs verwendet werden kann.

Auch bei der Verwendung eines Resonanz-SAW-Sensors erfolgt der Messvorgang in einem festen Zeitschlitz über mehrere Lüfterradumdrehungen oder über alle Zeitschlitze wenigstens einer Lüfterradumdrehung. Insofern wird auf die vorstehenden Erläuterungen verwiesen.

Um die Kerntemperatur mit einem Resonanz-SAW-Sensor zu ermitteln, werden folgende Schritte ausgeführt:
- Messen einer vorbestimmten Anzahl an Frequenzpunkten,
- Bestimmen der Resonanz durch Interpolation, und
- Ermitteln der Temperatur über eine Kennlinie oder eine Kalibrationskurve.

Es werden also zunächst einige Frequenzpunkte gemessen, beispielsweise fünf Frequenzpunkte. Über eine Interpolation der gemessenen Frequenzpunkte wird anschließend die Position des Minimums, welches der Resonanz bzw. der Resonanzfrequenz entspricht, bestimmt. Diese Resonanzfrequenz wird mit der vom Hersteller bereitgestellten Kennlinie verglichen, wobei basierend auf einer etwaigen Resonanzverschiebung die Kerntemperatur ermittelt werden kann. Alternativ kann bei Inbetriebnahme eine Kalibrationskurve aufgenommen werden, die ebenfalls bzw. anstelle der Kennlinie zum Ermitteln der Kerntemperatur genommen werden kann. Mit anderen Worten wird bei einer definierten Temperatur zunächst eine Kalibrierung durchgeführt, um das Resonanzverhalten des SAW-Sensors bei der definierten Temperatur zu erhalten, nämlich aufgrund der Kalibrationskurve. Im laufenden Betrieb kann dann die Kerntemperatur aufgrund der Abweichung der ermittelten Resonanz(-frequenz) von derjenigen der Kalibrationskurve bestimmt werden.

Ein Aspekt sieht vor, dass die Antenne mit einem Empfangskanal verbunden ist, in dem ein Verstärker vorgesehen ist. Die Steuer- und Auswerteeinheit ist eingerichtet, den Verstärker zuzuschalten, um das Antwortsignal zu verstärken, insbesondere wobei der Verstärker in einer Bypassleitung angeordnet ist. Ein bereits vorhandenes Kombinationsgargerät kann um einen solchen Verstärker, vorzugsweise um einen Verstärker pro Antenne, ergänzt werden. Dabei ist es besonders vorteilhaft, dass der Verstärker in einer Bypassleitung angeordnet ist, sodass eine bestehende Schaltung um ein Schaltungsmodul ergänzt werden kann.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Kombinationsgargeräts;
- Figur 2 ein Blockdiagramm einer in dem in Figur 1 gezeigten Kombinationsgargerät verwendete Leistungsstufe der Halbleiter-Mikrowelleneinheit;
- Figur 3 eine Darstellung eines Drehgebers, der beim erfindungsgemäßen Kombinationsgargerät verwendet werden kann, um die Winkelstellung des Lüfterrads zu ermitteln;
- Figur 4 eine Übersicht, die den Kerntemperaturerfassungsmodus der Halbleiter-Mikrowelleneinheit verdeutlicht;
- Figur 5 ein beispielhaftes Signal eines Laufzeitsensors;
- Figur 6 eine beispielhafte Impulsantwort eines Laufzeit-SAW-Sensors nach der Transformation in den Zeitbereich;
- Figur 7 eine beispielhafte Reflektion des Resonanz-SAW-Sensors; und
- Figur 8 eine beispielhafte Kennlinie für einen Resonanz-SAW-Sensor.

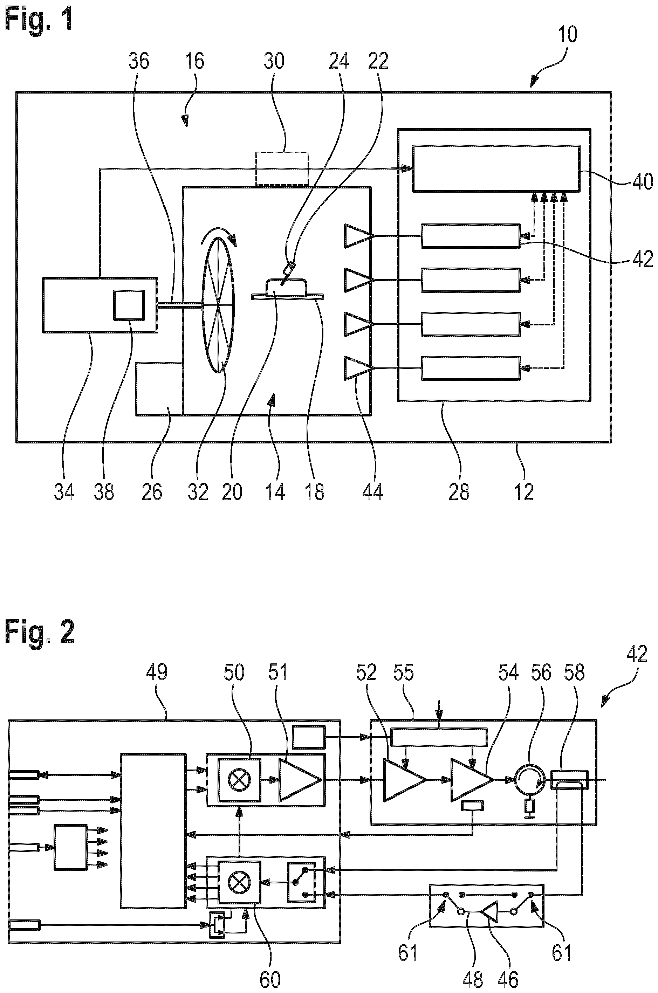

In Figur 1 ist ein Kombinationsgargerät 10 gezeigt, das ein Gehäuse 12 aufweist, welches einen Garraum 14 sowie einen Technikraum 16 umgibt. In dem Garraum 14 ist ein Gargutträger 18 vorgesehen, auf dem ein zu garendes Gargut 20 angeordnet ist.

Außerdem befindet sich ein Kerntemperaturfühler 22, der zumindest einen SAW-Sensor 24 umfasst, in dem Garraum 14. Der Kerntemperaturfühler 22 kann in das Gargut 20 gesteckt sein.

Das Gargut 20 wird mittels zumindest einer konventionellen Energiequelle 26 gegart, die beispielsweise eine Heizvorrichtung und/oder eine Dampfvorrichtung sein kann. Die konventionelle Energiequelle 26 ist dabei dem Garraum 14 zugeordnet, wobei über die konventionelle Energiequelle 26 ein Garraumklima im Garraum 14 erzeugt wird, mittels dem das Gargut 20 gegart wird.

Neben der konventionellen Energiequelle 26 weist das Kombinationsgargerät 10 zudem eine Halbleiter-Mikrowelleneinheit 28 auf, mittels der das Gargut 20 zusätzlich mittels Mikrowellen gegart wird. Insofern werden Mikrowellen in den Garraum 14 eingespeist, um entsprechende Energie an das Gargut 20 abzugeben.

In der gezeigten Ausführungsform weist das Kombinationsgargerät 10 zudem eine Steuer- und Auswerteeinheit 30 auf, die vorliegend separat zur Halbleiter-Mikrowelleneinheit 28 ausgebildet ist. Insofern handelt es sich bei der Steuer- und Auswerteeinheit 30 um eine separate Steuer- und Auswerteeinheit, beispielsweise eine übergeordnete Steuer- und Auswerteeinheit des Kombinationsgargeräts 10, die sämtliche Komponenten des Kombinationsgargeräts 10 ansteuert.

Alternativ kann die Steuer- und Auswerteeinheit 30 auch in die Halbleiter-Mikrowelleneinheit 28 integriert sein.

Darüber hinaus geht aus Figur 1 hervor, dass das Kombinationsgargerät 10 ein Lüfterrad 32 aufweist, welches dem Garraum 14 zugeordnet ist. Das Lüfterrad 32 wird mittels eines Antriebs 34 und einer Antriebswelle 36 drehend angetrieben. Hierdurch ist sichergestellt, dass das von der konventionellen Energiequelle 26 bereitgestellte Garraumklima innerhalb des Garraums 14 verwirbelt wird, um eine gleichmäßige Erwärmung des Garguts 20 mittels Heißluft und/oder Dampf sicherzustellen.

Dem Lüfterrad 32 ist ein Drehgeber 38 zugeordnet, der beispielsweise im Antrieb 34 integriert ist. Mithilfe des Drehgebers 38 kann die Winkelstellung des Lüfterrads 32 während des Betriebs des Lüfterrads 32 erfasst werden, also während der Antrieb 34 das Lüfterrad 32 antreibt. Bei dem Drehgeber kann es sich um einen Inkrementalgeber handeln.

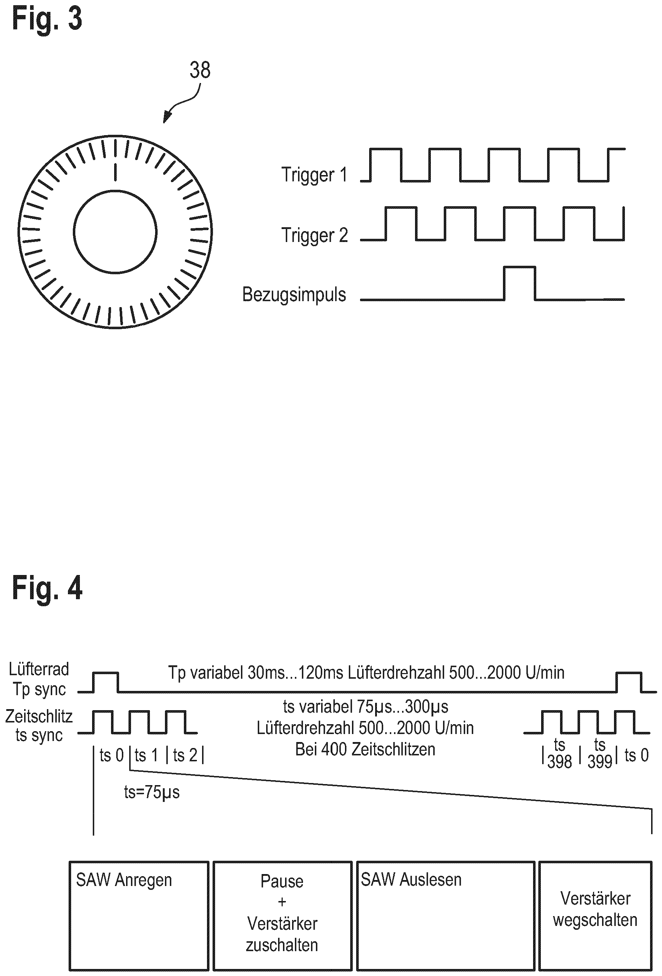

Beispielsweise ist der Drehgeber 38 als ein optischer Encoder ausgebildet, wie dies in Figur 3 gezeigt ist. Der Drehgeber 38 kann ein entsprechendes Drehgebersignal an die Steuer- und Auswerteeinheit 30 übermitteln, ausgehend von dem die Steuer- und Auswerteeinheit die Winkelstellung des Lüfterrads 32 ermittelt. Alternativ wird das Drehgebersignal an die Halbleiter-Mikrowelleneinheit 28 übermittelt.

Alternativ zu dem Drehgebersignal kann der Drehgeber 38 zwei Trägersignale ausgeben, die von der Steuer- und Auswerteeinheit 30 oder der Halbleiter-Mikrowelleneinheit 28 ausgewertet werden, um die Winkelstellung des Lüfterrads 32 zu ermitteln.

Alternativ zum Drehgeber 38 kann die Winkelstellung des Lüfterrads 32 von der Steuer- und Auswerteeinheit 30 auch basierend auf einer Drehzahl des Lüfterrads 32 berechnet werden, die von der Steuer- und Auswerteeinheit 30 aufgrund eines ablaufenden Garprogramms vorgegeben wird.

In der in Figur 1 gezeigten Ausführungsform werden die Winkelinformationen, also die ermittelte Winkelstellung des Lüfterrads 32 an die Halbleiter-Mikrowelleneinheit 28 übermittelt, die diese entsprechend verarbeitet, um einen entsprechenden Operationsmodus der Halbleiter-Mikrowelleneinheit 28 einzustellen bzw. auszuwählen, also in Abhängigkeit der erfassten Winkelstellung des Lüfterrads 32. Die Halbleiter-Mikrowelleneinheit 28 weist hierzu ein Ansteuerungsmodul 40 auf, welches die Winkelstellung des Lüfterrads 32 von der Steuer- und Auswerteeinheit 30 erhält oder, sofern die Steuer- und Auswerteeinheit 30 in der Halbleiter-Mikrowelleneinheit 28 integriert ist, diese entsprechend selbst ermittelt, wie vorstehend bereits erläutert.

In jedem Fall steuert das Ansteuerungsmodul 40 der Halbleiter-Mikrowelleneinheit 28 entsprechende Leistungsmodule 42 der Halbleiter-Mikrowelleneinheit 28 in Abhängigkeit der ermittelten Winkelstellung des Lüfterrads 32 an.

Die Leistungsmodule 42, welche in Figur 2 näher gezeigt sind, können auch als Mikrowellenleistungsstufen oder Leistungsstufen bezeichnet werden. Die Leistungsmodule 42 sind über Antennen 44 dem Garraum 14 zugeordnet, sodass von der Halbleiter-Mikrowelleneinheit 28 bereitgestellte Mikrowellen über die Antennen 44 in den Garraum 14 eingekoppelt werden können, um beispielsweise das Gargut 20 zu garen. Dabei kann eine Leistung von 250 W oder 500 W je Leistungsmodul 42 vorgesehen sein. Beispielsweise sind vier Leistungsmodule 42 mit einer Leistung von 250 W vorgesehen, sodass vier Leistungsstufen ausgebildet sind.

Die Ansteuerung der einzelnen Leistungsmodule 38 erfolgt dabei winkelabhängig, wie vorstehend bereits erläutert.

Der Aufbau und die Funktionsweise des Kombinationsgargeräts 10, insbesondere hinsichtlich der Ansteuerung der Leistungsmodule 42 bzw. der Halbleiter-Mikrowelleneinheit 28 in Abhängigkeit der Stellung des Lüfterrads 32, ist unter anderem in der DE 10 2021 110 521 A1 beschrieben, worauf Bezug genommen wird.

Wie in Figur 2 gezeigt, weisen die Leistungsmodule 42 unter anderem einen Verstärker 46 auf, insbesondere einen rauschfreien Verstärker. Dabei ist für jedes Leistungsmodul 42 ein Verstärker 46 vorgesehen, wobei die Verstärker 46 parallel betrieben werden.

Der Verstärker 46 ist dabei in einer Bypassleitung 48 angeordnet, sodass der Verstärker 46 je nach Ansteuerung der Leistungsmodule 42 zugeschaltet werden kann, indem die Bypassleitung 48 zugeschaltet wird, in der der Verstärker 46 vorhanden ist. Auf die Funktionsweise wird nachfolgend noch detailliert eingegangen.

Um das Kombinationsgargerät 10 zu betreiben, wird eine vollständige Umdrehung des Lüfterrads 32 beispielsweise in 400 Winkelsegmente unterteilt. Hierdurch ergeben sich 400 unterschiedliche Möglichkeiten, die Leistungsmodule 42 während einer einzigen Umdrehung des Lüfterrads 32 anzusteuern. Beispielsweise beträgt die Periodendauer Tₚ des Lüfterrads 32 zwischen 30 und 120 ms, wobei dies von der Drehgeschwindigkeit bzw. der Drehzahl des Lüfterrads 32 abhängt, wie unter anderem auch aus Figur 4 hervorgeht. Üblicherweise ist eine Lüfterdrehzahl zwischen 500 und 2.000 Umdrehungen pro Minute vorgesehen.

Die Periodendauer Tₚ wird dann in eine gewünschte Anzahl an Zeitschlitzen unterteilt, sodass die vollständige Umdrehung des Lüfterrads 32, also eine 360°-Umdrehung des Lüfterrads 32, in eine entsprechende Anzahl an Winkelsegmenten unterteilt ist. Bevorzugt wird die Periodendauer in 400 Teilschlitze unterteilt, was ebenfalls aus Figur 4 hervorgeht.

Die Winkelsegmente können dabei einen gleichgroßen Winkelbereich umfassen oder variabel hinsichtlich des Winkelbereichs sein. Die Dauer des entsprechenden Zeitschlitzes beträgt bei 400 Zeitschlitzen beispielsweise zwischen 75 und 300 µs. Die Dauer der einzelnen Zeitschlitze hängt aber von der Lüfterdrehzahl des Lüfterrads 32 ab.

Das Ansteuerungsmodul 40 erhält die Informationen bezüglich der Winkelstellung des Lüfterrads 32 von der Steuer- und Auswerteeinheit 30 bzw. berechnet diese ausgehend von den erhaltenen Daten selbst, beispielsweise basierend auf dem Drehgeber 38.

Hierdurch ist das Ansteuerungsmodul 40 in der Lage, ein Taktsignal mit der Periode tₛ eines Zeitschlitzes bereitzustellen, über das die einzelnen Leistungsmodule 42 angesteuert werden.

Darüber hinaus stellt das Ansteuerungsmodul 40 eine Frequenzreferenz zur Verfügung, die an sämtliche Leistungsmodule 42 übermittelt wird.

Die Steuer- und Auswerteeinheit 30 übermittelt den Leistungsmodulen 42 bzw. dem Ansteuerungsmodul 40 außerdem den nächsten Operationsmodus, das heißt, welcher Schritt als Nächstes ausgeführt werden soll. Die Operationsmodi umfassen dabei "Messen der S-Parameter", "Heizen des Garraums mit den entsprechenden Anregungsvektoren" (Garmodus), "Leerlauf" und "kabelloses Messen der Kerntemperatur" (Kerntemperaturerfassungsmodus). Mit dem nächsten Taktsignal wird die übermittelte Operation dann synchron ausgeführt.

Das Ansteuerungsmodul 40 steuert demnach die einzelnen Leistungsmodule 42 mittels eines Taktsignals bzw. des Triggersignals mit der Periode tₛ eines Zeitschlitzes derart an, dass in den jeweiligen Winkelsegmenten bzw. Zeitschlitzen der entsprechend zugeordnete Anregungsvektor verwendet wird.

Im jeweiligen Winkelsegment bzw. Zeitschlitz werden die dem Anregungsvektor zugeordnete Ansteuerungsparameter für die Phase der zu erzeugenden Mikrowellen zur Verfügung gestellt, die zusammen mit der Frequenzreferenz durch das jeweilige Leistungsmodul 42 verarbeitet werden, um die Mikrowellen entsprechend zu erzeugen.

Die Leistungsmodule 42 weisen hierzu eine Vorstufe 49 auf, die einen IQ-Modulator 50 sowie wenigstens einen nachgeschalteten Verstärker 51 umfasst, sodass das gewünschte Mikrowellensignal erzeugt wird.

Der IQ-Modulator 50 synthetisiert die entsprechenden Amplituden und Phasen des Signals, was mittels des Verstärkers 51 verstärkt wird, um dann über einen Treiber 52 und einen Leistungsverstärker 54 verstärkt zu werden, die in einer Endstufe 55 des jeweiligen Leistungsmoduls 42 vorgesehen sind. Dabei können auch zwei oder mehr Leistungsverstärker parallel betrieben werden, um die Ausgangsleistung einer Leistungsstufe zu vergrößern.

Das so erhaltene Mikrowellensignal wird über die dem Leistungsmodul 42 zugeordnete Antenne 44, die in Figur 2 nicht dargestellt ist, in den Garraum 14 eingespeist.

Ein Zirkulator 56 absorbiert Reflexionen aus dem Garraum 14, die über die Antenne 44 empfangen werden, und stellt sicher, dass diese nicht versehentlich in die zu schützenden Komponenten des Leistungsmoduls 42 zurückgespeist werden. Die Energie der reflektierten Mikrowellen wird in einem dem Zirkulator 56 zugeordneten Widerstand in thermische Energie umgewandelt.

Außerdem wird über einen zwischen dem Zirkulator 56 und der Antenne 44 angeordneten Richtkoppler 58 die vorwärts- und rückwärtslaufenden Wellen zumindest teilweise ausgekoppelt, insbesondere hinsichtlich der Leistung. Beispielsweise handelt es sich bei dem Richtkoppler 58 um einen 20 dB- oder 40 dB-Richtkoppler. Dieser ausgekoppelte Teil wird einem IQ-Demodulator 60 des Leistungsmoduls 42 zugeführt und wird wieder digitalisiert, um ausgewertet zu werden.

Es wird insbesondere aus Figur 2 deutlich, dass der in der Bypassleitung 48 angeordnete Verstärker 46 einem Port des Richtkopplers 58 zugeordnet ist, an dem die aus dem Garraum 14 reflektierten Signale bzw. die rückwärtslaufenden Wellen ausgegeben werden. Die vorwärtslaufenden Wellen werden dagegen an einem Port des Richtkopplers 58 ausgegeben, welcher dem IQ-Demodulator 60 zugeordnet ist.

In dem Operationsmodus "Heizen", also dem Garmodus, dient dies der Reglung der Anregungsvektoren. Dabei sind die verschiedenen Anregungsvektoren der jeweiligen Winkelstellung des Lüfterrads 32 angepasst, wie vorstehend und grundsätzlich in der DE 10 2021 110 521 A1 beschrieben.

Im Operationsmodus "S-Parameter Messen" werden die Steuerparameter gemessen. Die Steuerparametermessung kann verwendet werden, um die Anregungsvektoren zu berechnen, die für den Operationsmodus "Heizen" bzw. dem Garmodus verwendet werden sollen. Ebenso kann im Operationsmodus "S-Parameter Messen" festgestellt werden, ob eine Veränderung der dielektrischen Eigenschaften des Garraums erfolgt ist, beispielsweise aufgrund einer Veränderung der Eigenschaften des Garguts bzw. einer Neubeschickung des Garraums 14. Insofern kann auch nur ein Sensieren mittels der Halbleiter-Mikrowelleneinheit 28 erfolgen- Anders ausgedrückt ist es nicht zwingend notwendig, dass die Halbleiter-Mikrowelleneinheit 28 einen Garmodus aufweist. Sofern die Halbleiter-Mikrowelleneinheit 28 keinen Garmodus aufweist, ist es beispielsweise auch nicht notwendig, die Endstufe 55 vorzusehen.

Im Operationsmodus "Leerlauf" wird die Halbleiter-Mikrowelleneinheit 28 nicht angesteuert, sodass keine Energie von der Halbleiter-Mikrowelleneinheit 28 in den Garraum 14 eingespeist wird. Ebenso werden im Operationsmodus "Leerlauf" keine Mikrowellen in den Garraum 14 eingespeist, die zum Abtasten bzw. Sensieren dienen.

In diesen drei Operationsmodi ist der in der Bypassleitung 48 angeordnete Verstärker 46 noch überbrückt. Die vom Richtkoppler 58 ausgekoppelten Signale laufen demnach in den genannten drei Operationsmodi nicht über den Verstärker 46 und die Bypassleitung 48. Mit anderen Worten sind in den drei Operationsmodi der Bypassleitung 48 zugeordnete Schalter 61 in einer ersten Stellung.

In dem Kerntemperaturerfassungsmodus kann der Verstärker 46 zugeschaltet, indem die Schalter 61 derart angesteuert werden, dass sie eine zweite Stellung einnehmen, in der die Bypassleitung 48 zwischen dem Richtkoppler 58 und dem IQ-Demodulator 60 geschaltet ist.

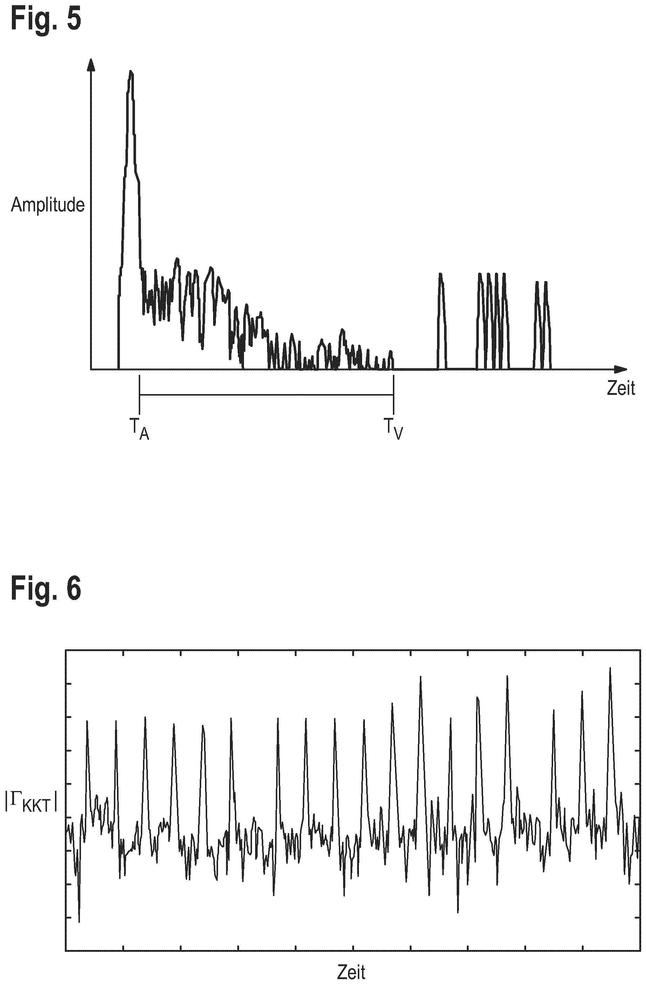

Der Kerntemperaturerfassungsmodus wird nachfolgend anhand der Figuren 4 und 5 im Detail beschrieben.

In beispielsweise einem Zeitschlitz pro Umdrehung des Lüfterrads 32 wird der SAW-Sensor 24 des Kerntemperaturfühlers 22 mithilfe der von der Halbleiter-Mikrowelleneinheit 28 eingespeisten Mikrowellen angeregt, was in Figur 4 als "SAW Anregen" bezeichnet ist. In Figur 5 ist die Anregung über den Impuls zum Anregungs-Zeitpunkt T_{A} gezeigt.

In dem Kerntemperaturerfassungsmodus wird also zunächst der SAW-Sensor 24 von zumindest einem der Leistungsmodule 42 angeregt. Wahlweise können alle Leistungsmodule 42 synchron aktiv sein oder auch nur ein Teil der Leistungsmodule 42 bzw. ein einziges Leistungsmodul 42 aktiv sein.

Nach dem Anregen des Kerntemperaturfühlers 22, insbesondere des SAW-Sensors 24, wird eine Pause eingelegt, bspw. eine Pause von bis zu 10 µs, insbesondere zwischen 1 und 5 µs, wie in Figur 4 gezeigt. Diese Pause dient dazu, dass etwaige Störreflektionen abgewartet werden, die sich aufgrund der Anregung ergeben, wie aus Figur 5 deutlich wird. Dort sind die Störreflektionen bis zum Zeitpunkt Tv dargestellt. Die Leistungsmodule 42 können im Leerlaufmodus betrieben werden, das heißt die Halbleiter-Mikrowelleneinheit 28 kein Mikrowellensignal aussendet.

Der SAW-Sensor 24 ist durch das Anregungssignal aufgeladen worden und gibt ein Antwortsignal ab, welches entsprechend von wenigstens einer der Antennen 44 der Halbleiter-Mikrowelleneinheit 28 empfangen wird, also nach einem Abklingen der Mikrowellenenergie im Garraum 14. Dies ist in Figur 4 als "SAW Auslesen" bezeichnet. In Figur 5 ist das Antwortsignal entsprechend nach dem Zeitpunkt Tv dargestellt.

Auch kann das Antwortsignal von allen Antennen 44 der Halbleiter-Mikrowelleneinheit 28 empfangen werden, sodass mehrere Messsignale vorliegen.

Genauer gesagt erfolgt vor dem Empfangen des Antwortsignals das Umschalten der Schalter 61, sodass die Bypassleitung 48, in der der Verstärker 46 angeordnet ist, zugeschaltet wird. Das Ansteuern der Schalter 61 und somit dem Zuschalten des Verstärkers 61 erfolgt nach dem Anregen des SAW-Sensors 24 und dem Abklingen im Garraum 14, also nach der Pause, allerdings vor dem Empfangen des Antwortsignals, sodass das Antwortsignal über den Verstärker 46 verstärkt wird.

Zum Ende der Leerlaufphase, in Figur 5 zum Zeitpunkt Tv, wird der Verstärker 46 also zugeschaltet, sodass das Signal des SAW-Sensors 24 empfangen und verstärkt wird. Nach Empfangen des Antwortsignals des SAW-Sensors 24 wird der Verstärker 46 wieder weggeschaltet, also die Schalter 61 in die andere Stellung gesteuert, was in Figur 4 als "SAW Auslesen" bezeichnet ist.

Das Zuschalten des Verstärkers 46 kann insbesondere dann von Vorteil sein, wenn der SAW-Sensor 24 schlecht an das Mikrowellenfeld angebunden ist, sodass die Mikrowellen zwar mit einer verhältnismäßig hohen Leistung beim Anregen des SAW-Sensors 24 eingespeist werden können, ohne dass das Risiko besteht, den SAW-Sensor 24 zu beschädigen.

Aufgrund der schlechten Anbindung hat das Antwortsignal allerdings auch eine geringe Signalstärke, weswegen dies entsprechend verstärkt wird, damit es ausgewertet werden kann.

Das schwache Antwortsignal wird mit dem Verstärker 46 verstärkt und kann über den IQ-Demodulator 60 digitalisiert und anschließend ausgewertet werden. Der Verstärker 46 dient also dazu, den Dynamikbereich der Leistungsstufe 42 zu erweitern.

Wie vorstehend bereits erläutert, ist der Verstärker 46 unter anderem im Garmodus inaktiv bzw. nicht zugeschaltet, sodass reflektierte Mikrowellen mit hoher Leistung nicht weiter verstärkt werden.

Insofern ist das Leistungsniveau so abgestimmt, dass über den IQ-Demodulator 60 die Leistungsmodule 42 korrekt angesteuert werden.

Wie bereits erläutert, ist der Ablauf des Kerntemperaturerfassungsmodus in Figur 4 gezeigt. Hier ist zu sehen, dass der komplette Ablauf innerhalb eines Zeitschlitzes tₛ, den sogenannten Messzeitschlitz, stattfindet. Wahlweise kann die Kerntemperaturmessung in einem festen Zeitschlitz pro Lüfterradumdrehung stattfinden oder alternativ in jedem Zeitschlitz einer Lüfterradumdrehung.

Ist der verwendete SAW-Sensor 24 ein Laufzeit-SAW-Sensor, so können nacheinander alle Frequenzen im 2,4 GHz-ISM-Band ausgemessen werden. Der Frequenzbereich der aufgenommenen Reflektionen des SAW-Sensors 24 wird anschließend in den Zeitbereich transformiert, woraus sich die Impulsantwort des SAW-Sensors 24 ergibt, die entsprechende Peaks enthält. Ein Beispiel eines solchen Signals ist in Figur 6 gezeigt.

Die Impulsantwort wird nun zeitlich eingegrenzt, um darin nach den Antworten der einzelnen Reflektoren, welche auf dem SAW-Sensor 24 verbaut sind, zu suchen. Diese entsprechen den einzelnen Peaks, die in Figur 6 gezeigt sind.

Um die Impulsantwort zeitlich einzugrenzen, können zwei Fenster verwendet werden, welche in einem gewissen zeitlichen Verhältnis zueinander auf die Impulsantwort gelegt werden. Dabei ist das Verhältnis so gewählt, dass es dem zeitlichen Verhältnis zweier Peaks entspricht. Dieses Verhältnis wird durch die Anordnung der Reflektoren auf dem SAW-Sensor 24 vorgegeben, sodass diese Information vorbekannt ist.

Die Fenster werden anschließend von einem definierten Startwert bis zu einem definierten Stoppwert mit dem festen Verhältnis über die Impulsantwort geschoben, sodass sukzessive Bereiche der Impulsantwort analysiert werden. Dabei wird jeweils die Summe von den in den Fenstern eingeschlossenen Leistungen gebildet, welche gemessen worden sind, um Fensterleistungssummen zu ermitteln, basierend auf denen eine Leistungskurve erhalten werden kann.

Aus dieser Leistungskurve wird dann das jeweilige Maximum ermittelt.

Von den Maxima der Leistungskurve kann auf die zeitliche Position der einzelnen Peaks geschlossen werden.

Durch die Kombination der zeitlichen Position der einzelnen Peaks sowie eines ersten Referenzwertes kann eine grobe Temperatur bestimmt werden.

In einem nächsten Schritt werden die einzelnen Peaks voneinander separiert, um auf deren Phaseninformationen schließen zu können. Hierfür wird das sogenannte Time-Gating angewandt. Beim Time-Gating wird über einen einzelnen Peak ein Fenster gelegt, wozu die zeitliche Position der Peaks aus dem vorherigen Schritt benutzt wird. Alle anderen Peaks werden auf 0 gesetzt, sodass der jeweils zu untersuchende Peak isoliert wird. Die derartig modifizierte Impulsantwort, welche nun nur noch aus einem einzelnen Peak besteht, wird anschließend in den Frequenzbereich transformiert.

Aus dem transformierten Signal kann die Phaseninformation des zuvor ausgewählten Peaks ermittelt werden. Dementsprechend muss das Time-Gating für alle Peaks des SAW-Sensors 24 wiederholt werden. Aus den Phaseninformationen der jeweiligen Peaks wird dann der Phasenwert an der Mittenfrequenz des SAW-Sensors 24 ausgelesen.

Dieser Phasenwert kann jedoch mehrdeutig sein, da die Phase nur von 0 bis 360° definiert ist. Dementsprechend wird die grobe Temperatur aus dem zuvor durchgeführten Schritt benötigt.

Mithilfe des Phasenwerts, eines zweiten Referenzwerts und des groben Temperaturwerts kann nun auf einen genaueren Temperaturwert geschlossen werden. Dabei liegt die Genauigkeit dieses Temperaturwerts in einem Bereich von ±0,5°C.

Der zweite Referenzwert kann aus einer zuvor durchgeführten Kalibrierung ermittelt worden sein.

Alternativ hierzu kann von dem Hersteller der zweite Referenzwert vorgegeben sein.

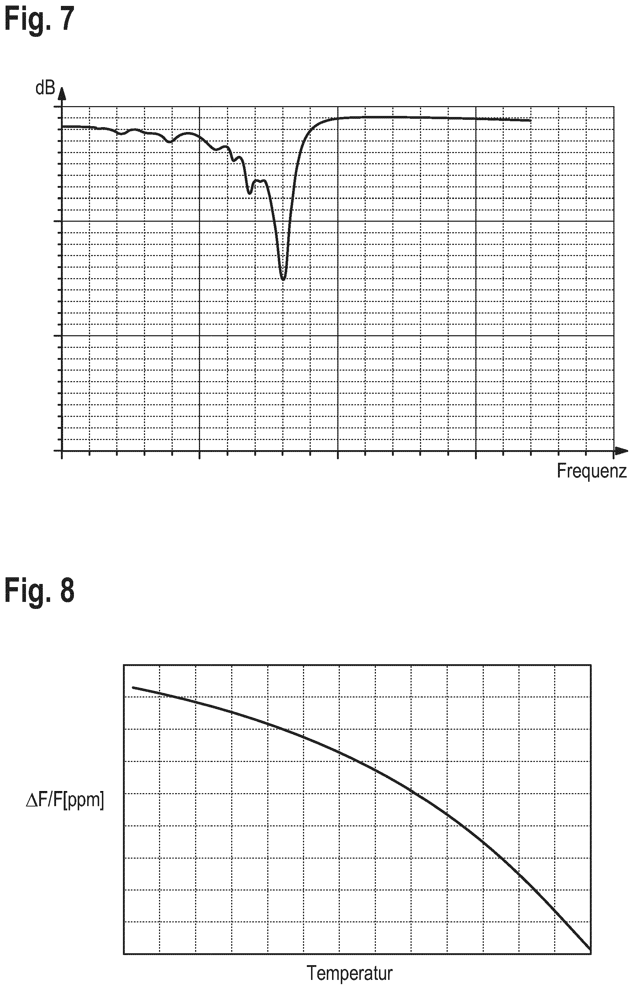

Alternativ zu einem Laufzeit-SAW-Sensor kann auch ein Resonanz-SAW-Sensor benutzt werden. Dabei unterscheidet sich die Auswertung der Temperatur. Ein Beispiel einer Reflektion eines Resonanz-SAW-Sensors ist in Figur 7 gezeigt.

Üblicherweise werden für einen Resonanz-SAW-Sensor einige Frequenzpunkte, beispielsweise 5 Frequenzpunkte, in dem gewünschten Frequenzbereich gemessen. Über eine Interpolation kann anschließend die Position des Minimums der Reflektion des Resonanz-SAW-Sensors bestimmt werden. Dabei gibt die Position des Minimums die Resonanzfrequenz an.

Ausgehend von der Resonanzfrequenz kann anschließend über eine Kennlinie, die herstellerseitig bekannt ist, die Temperatur ermittelt werden. Ein Beispiel einer solchen Kennlinie ist in Figur 8 gezeigt.

Alternativ zu einer Kennlinie vom Hersteller kann bei Inbetriebnahme auch eine Kalibrationskurve aufgenommen werden, die anstelle der Kennlinie verwendet werden kann.

Wird ein Resonanz-SAW-Sensor im Kerntemperaturfühler verwendet, so wird der Frequenzbereich um die erwartete oder gemessene Resonanz des Resonanz-SAW-Sensors im Garmodus ausgespart, also bei der Ansteuerung der Halbleiter-Mikrowelleneinheit 28 im Garmodus, um den SAW-Sensor 24 nicht zu beschädigen und eine bestmögliche Ankopplung an das Mikrowellenfeld zu gewährleisten.

Grundsätzlich kann also ein kabelloser Kerntemperaturfühler 22 verwendet werden, der einen SAW-Sensor 24 aufweist, wobei der SAW-Sensor 24 mittels der Halbleiter-Mikrowelleneinheit 28 angeregt wird, die ansonsten zum Einbringen von Mikrowellenenergie in das Gargut 20 vorgesehen ist. Auch kann die Halbleiter-Mikrowelleneinheit 28 dazu genutzt werden, um das Antwortsignal des SAW-Sensors 24 zu empfangen. Insofern bedarf es keiner zusätzlichen Anregungsquelle oder Auswertungseinheit.

## Patentansprüche

1. Verfahren zum Messen einer Kerntemperatur eines Garguts (20) in einem Kombinationsgargerät (10) mit einem Garraum (14), einer Halbleiter-Mikrowelleneinheit (28) und wenigstens einer Antenne (44), mit den folgenden Schritten:
- Einspeisen von Mikrowellen in den Garraum (14) mittels der Halbleiter-Mikrowelleneinheit (28) in einem Messzeitschlitz;
- Anregen eines in einem Kerntemperaturfühler (22) integrierten Oberflächenwellen-Sensors (24), SAW-Sensors, im Garraum (14) mit Mikrowellenenergie der eingespeisten Mikrowellen;
- Empfangen eines Antwortsignals des SAW-Sensors (24) über die Antenne (44), wobei das Antwortsignal vom SAW-Sensor (24) nach einem Abklingen der Mikrowellenenergie im Garraum (14) reflektiert wird; und
- Auswerten des Antwortsignals.

2. Verfahren nach Anspruch 1, **dadurch gekennzeichnet, dass** nach dem Anregen des SAW-Sensors (24) eine Pause erfolgt, insbesondere eine Pause bis zu 10 µs, beispielsweise zwischen 1 und 5 µs, bevor das Antwortsignal empfangen wird.

3. Verfahren nach Anspruch 1 oder 2, **dadurch gekennzeichnet, dass** die Antenne (44) mit einem Empfangskanal verbunden ist, in dem ein Verstärker (46) vorgesehen ist, der zugeschaltet wird, um das Antwortsignal zu verstärken, insbesondere wobei der Verstärker (46) in einer Bypassleitung (48) angeordnet ist, die zugeschaltet wird, um den Verstärker (48) zuzuschalten.

4. Verfahren nach einem der vorhergehenden Ansprüche, **dadurch gekennzeichnet, dass** ein Lüfterrad (32) vorgesehen ist, wobei die Halbleiter-Mikrowelleneinheit (28) mit einer Lüfterrad-Umdrehung synchronisiert ist, sodass die Lüfterrad-Umdrehung in mehrere Zeitschlitze zerlegt ist, wobei ein Zeitschlitz einem definierten Winkelsegment des sich drehenden Lüfterrads (32) entspricht, wobei das Winkelsegment kleiner als 360° ist, insbesondere kleiner als 10°, vorzugsweise kleiner als 1°, wobei die Anzahl an Zeitschlitzen bevorzugt 400 ist.

5. Verfahren nach einem der vorhergehenden Ansprüche, **dadurch gekennzeichnet, dass** die Mikrowellenergie, die zum Anregen des SAW-Sensors (24) dient, nicht der Resonanzfrequenz des SAW-Sensors (24) entspricht.

6. Verfahren nach einem der vorhergehenden Ansprüche, **dadurch gekennzeichnet, dass** der SAW-Sensor (24) ein Laufzeit-SAW-Sensor ist, wobei in einem Frequenzbereich mehrere Frequenzpunkte vermessen werden, die in den Zeitbereich transformiert werden, um die Kerntemperatur zu ermitteln, insbesondere wobei die Kerntemperatur anhand einer Laufzeit einer Impulsantwort ermittelt wird.

7. Verfahren nach Anspruch 6, **dadurch gekennzeichnet, dass** der gesamte Frequenzbereich über äquidistante Frequenzpunkte vermessen wird, insbesondere wobei der Messvorgang über alle Zeitschlitze in wenigstens einer Lüfterradumdrehung, vorzugsweise in zwei bis drei Lüfterradumdrehungen, oder in einem festen Zeitschlitz über mehrere Lüfterradumdrehungen erfolgt, wobei die Anzahl der Lüfterradumdrehung der Anzahl der äquidistanten Frequenzpunkte entspricht.

8. Verfahren nach Anspruch 6 oder 7, **dadurch gekennzeichnet, dass** die Kerntemperatur erfasst wird, indem folgende Schritte ausgeführt werden:
- Ermitteln eines groben Temperaturwertes basierend auf einem ersten Referenzwert und einer zeitlichen Position wenigstens eines Peaks der Impulsantwort, wobei die zeitliche Position ermittelt wird, indem das Maximum einer aus der Impulsantwort resultierenden Leistungskurve ermittelt wird; und
- Ermitteln eines genauen Temperaturwertes über einen Phasenwert, einen zweiten Referenzwert und den zuvor ermittelten groben Temperaturwert.

9. Verfahren nach einem der Ansprüche 1 bis 5, **dadurch gekennzeichnet, dass** der SAW-Sensor (24) ein Resonanz-SAW-Sensor ist, wobei nur ein erwarteter Frequenzbereich vermessen wird, und wobei die Kerntemperatur anhand einer Resonanzverschiebung ermittelt wird, insbesondere wobei der Messvorgang in einem festen Zeitschlitz über mehrere Lüfterradumdrehungen oder über alle Zeitschlitze wenigstens einer Lüfterradumdrehung erfolgt.

10. Verfahren nach Anspruch 9, **dadurch gekennzeichnet, dass** die Kerntemperatur ermittelt wird, indem die folgenden Schritte ausgeführt werden:
- Messen einer vorbestimmten Anzahl an Frequenzpunkten;
- Bestimmen der Resonanz durch Interpolation; und
- Ermitteln der Temperatur über eine Kennlinie oder eine Kalibrationskurve.

11. Kombinationsgargerät (10) zum Garen von Gargut (20), mit einer Steuer- und Auswerteeinheit (30), einer Halbleiter-Mikrowelleneinheit (28) und einer Antenne (44), wobei das Kombinationsgargerät (10) einen Kerntemperaturfühler (22) mit wenigstens einem integrierten Oberflächenwellen-Sensor (SAW-Sensors 24) umfasst, wobei die Halbleiter-Mikrowelleneinheit (28) eingerichtet ist, in einem Kerntemperaturerfassungsmodus zum Auslesen einer Kerntemperatur mittels des SAW-Sensors (24) betrieben zu werden, in dem eine Steuer- und Auswerteeinheit (30) dazu eingerichtet ist, die Halbleiter-Mikrowelleneinheit (28) im Kerntemperaturerfassungsmodus zu betreiben, in dem der SAW-Sensor (24) angeregt wird, wobei der SAW-Sensor (24) eingerichtet ist, ein Antwortsignal auszugeben, wobei die Antenne (44) eingerichtet ist, das vom SAW-Sensor (24) ausgesandte Antwortsignal zu empfangen und an die Steuer- und Auswerteeinheit (30) weiterzuleiten, und wobei die Steuer- und Auswerteeinheit (30) ferner eingerichtet ist, das vom SAW-Sensor (24) empfangene Antwortsignal auszuwerten, um die Kerntemperatur zu ermitteln.

12. Kombinationsgerät (10) nach Anspruch 11, **dadurch gekennzeichnet, dass** die Antenne (44) mit einem Empfangskanal verbunden ist, in dem ein Verstärker (46) vorgesehen ist, wobei die Steuer- und Auswerteeinheit (30) eingerichtet ist, den Verstärker (46) zuzuschalten, um das Antwortsignal zu verstärken, insbesondere wobei der Verstärker (46) in einer Bypassleitung (48) angeordnet ist.
